# EUROPÄISCHE PATENTSCHRIFT

(11) **EP 0 936 160 B1**
(45) Veröffentlichungstag und Bekanntmachung des Hinweises auf die Patenterteilung: **13.11.2002**
(21) Anmeldenummer: 98124853.7
(22) Anmeldetag: 31.12.1998
(51) Int. Cl.: B65G 1/04

(54) **Lager für Paletten oder für Stückgüter mit genormter Grundfläche**
Storage device for pallets or articles with a standardised base part
Dispositif de stockage pour palettes ou des articles avec une base standardisée

(30) Priorität: 10.02.1998 DE 29802224 U
(43) Veröffentlichungstag der Anmeldung: 18.08.1999
(73) Patentinhaber: NEDCON MAGAZIJNINRICHTING B.V., NL-7000 AA Doetinchem (NL)
(72) Erfinder: Meijer, Obbe Jacob, 7451 HB Holten (NL)
(74) Vertreter: Christophersen & Partner

(56) Entgegenhaltungen:
- US-A- 3 800 963
- US-A- 4 345 524
- US-A- 5 388 955

## Beschreibung

Die Erfindung betrifft ein Lager für Paletten oder für Stückgüter mit genormter Grundfläche, mit einer Stützkonstruktion aus vertikalen Stützen, zwischen denen sich quer zur Ein- und Auslagerungsrichtung horizontale Traversen erstrecken, und mit paarweise oberhalb der Traversen angeordneten, sich in Ein- und Auslagerungsrichtung erstreckenden Profilschienen, an denen jeweils eine langgestreckte Auflagefläche für die Paletten oder Stückgüter und unterhalb der Auflagefläche eine langgestreckte Laufbahn für einen rollengeführten Hubwagen (Satellit) ausgebildet ist, wobei die Profilschienen an Konsolen befestigt sind, und wobei jede Konsole an der darunterliegenden Traverse angeschweißt ist, wobei die Laufbahn der Profilschiene an einem in Richtung auf die jeweils andere Profilschiene ragenden Profilabschnitt ausgebildet ist.

Anwendung finden solche Lagerregale in erster Linie in Großlagern mit automatischer, rechnergesteuerter Ein- und Auslagerung bestückter Paletten. Die einzelnen Paletten liegen im Bereich ihrer äußeren Ränder auf langgestreckten Profilschienen auf, deren Länge so bemessen ist, daß darauf mehrere Paletten hintereinander Platz finden. Um die Paletten entlang der Profilschienen an einen andere Lagerplatz zu verbringen, ist in jedes Paar Profilschienen zumindest ein Hubwagen eingesetzt, oft auch als "Satellit" bezeichnet. Zur Führung dieses in der Regel elektrisch angetriebenen Hubwagens entlang der Profilschienen ist an diesen in ihrem unteren Bereich jeweils eine Laufbahn angeformt, auf der sich die Rollen des Satelliten abstützen. Mittels einer eingebauten Hubeinrichtung ist dieser in der Lage, eine oberhalb auf der Profilschiene aufliegende Palette anzuheben und anschließend entlang der Profilschienen an einen anderen Lagerplatz zu verfahren.

Die Profilschienen sind einzeln mit den vertikalen Stützen und den horizontalen Traversen des Regallagers verschraubt. Da hierbei die Schraublöcher an der Traverse einerseits und der Profilschiene andererseits nicht immer vollständig fluchten, ist vor dem endgültigen Anziehen der Verschraubung sicherzustellen, daß die jeweilige Profilschiene korrekt ausgerichtet ist, und insbesondere deren Abstand zu der jeweils anderen Profilschiene desselben Paares stimmt. Da mithin die exakte Verschraubung der Teile relativ zeitaufwendig ist, werden für die Traversen offene Profile eingesetzt, die sich durch eine relativ gute Zugänglichkeit zu den verwendeten Schrauben oder Muttern auszeichnen. Allerdings weisen offene Profile im Vergleich zu geschlossenen Profilen desselben Querschnitts eine geringere Belastbarkeit auf. Die montagebedingte Verwendung offener Profile für die Traversen erfordert daher größere Querschnitte und vor allem größere Querschnittshöhen der Traversen selbst. Der hierdurch eintretende Verlust an nutzbarer Höhe ist zwar in jedem Regalfach für sich betrachtet nicht groß, da jedoch gattungsgemäße Lagerregale mit mehreren Lagerebenen übereinander errichtet werden, entstehen durch die Verwendung offener Traversenprofile in der Summe erhebliche Platznachteile. Gleichwohl ist festzustellen, daß trotz der durch Verwendung der offenen Tragprofile erleichterten Zugänglichkeit zu den Verschraubungsstellen die Errichtung eines gattungsgemäßen Lagers immer noch mit einem erheblichen Montageaufwand und damit kostenträchtigen Zeitaufwand verbunden ist.

Ein Lager der eingangs genannten Art ist aus der US 5,388,955 bekannt. Bei dem hier gezeigten Lager für rollenförmige Güter bilden langgestreckte Profischienen ein Auflagefläche für die rollenförmigen Stückgüter, beispielsweise Papierrollen, wobei die Profilschienen an auf der darunter liegenden Traverse angeschweißten Konsolen befestigt sind. Die Profilschienen bilden dabei unterhalb der Auflagefläche eine Laufbahn für einen rollengeführten Hubwagen, welche auf der auf der Traverse verschweißten Konsole festliegt Die hier gezeigte Konsole erstreckt sich über die gesamte Länge der Profilschiene und ist als Winkelprofil ausgebildet. Zum Aufbau dieses Regals muß zunächst das als Konsole dienende Winkelprofil auf den Regaltraversen jeweils verschweißt und die Profilschiene anschließend auf dieser Konsole aufgebracht werden.

Dies stellt einen vergleichsweise großen Montageaufwand dar.

In der US 3,800,963 wird ein Lagerregal für palettierte Güter gezeigt, in dem ebenfalls sich in Ein- und Auslagerungsrichtung erstreckende Profilschienen eine Auflagefläche für die Paletten und eine unterhalb dazu angeordnete langgestreckte Laufbahn für einen rollengeführten Hubwagen ausbilden. Die Profilschienen sind jeweils über Konsolen an sich darunter erstreckenden Traversen festgelegt. Die Konsolen sind zudem mit den vertikalen Stützen verbunden. Dementsprechend erfordert auch die hier gezeigte Regalkonstruktion einen erheblichen Montageaufwand, da jede einzelne Konsole erst bei zusammengesetzten Regalstützen und Traversen an diesen befestigt werden kann. Zudem erfährt ein mit Waren belasteter Hubwagen auf seiner Laufbahn in Ein- bzw. Auslagerungsrichtung einen unruhigen, wellenförmigen Lauf, da die durch die Profifschiene gebildete Laufbahn zwischen den Querträgern eine elastische Verbiegung in vertikaler Richtung erfährt, jedoch durch das direkte Aufliegen auf den Konsolen an den Querträgern in vertikaler Position festgelegt ist. Ein solch unruhiger Lauf eines Hubwagens, der mit empfindlichen Gütern beladen ist, ist für ein gattungsgemäßes Lager äußerst unerwünscht.

Der Erfindung liegt die **Aufgabe** zugrunde, ein Lager für Paletten oder für Stückgüter mit genormter Grundfläche zu schaffen, das sich im Vergleich zu herkömmlichen, gleich stark belastbaren Regalkonstruktionen mit weniger Montageaufwand und damit in kürzerer Zeit erstellen läßt, und welches einen ruhigen Lauf eines auf den Laufbahnen geführten Hubwagens gewährleistet.

Zur **Lösung** wird bei einem Lager der eingangs genannten Art vorgeschlagen, daß sich zwischen dem Profilabschnitt und der unterhalb angeordneten Traverse ein vertikaler Freiraum befindet, ohne daß sich der Profilabschnitt auf der Traverse abstützt.

Bei einem solchermaßen ausgebildeten Lagerregal können die einzelnen Traversen bereits vor der Endmontage des Lagerregals mit den Konsolen versehen werden, indem diese an den Traversen angeschweißt werden. Diese Arbeit läßt sich an einem hierfür besonders geeigneten Ort vorbereitend erledigen, so daß am Ort der Erstellung und Aufrichtung des Lagerregals solche zeitaufwendigen Arbeiten nicht mehr durchgeführt werden müssen, wobei diese Arbeiten außerdem gefährlich sind, da die mit der Verbindung der einzelnen Teile befaßten Monteure oft in dem Großregal herumklettem müssen.

Da die bereits mit den Konsolen fertig verschweißten Traversen an den Montageort geliefert werden, kann auch die vollständige Lackierung oder eine andere Oberflächenbehandlung der so hergestellten Baueinheit bereits im Fertigungsbetrieb vorgenommen werden, so daß auch diesbezügliche Arbeiten bei der Endmontage vor Ort nicht mehr erforderlich sind. Ein erfindungsgemäß ausgebildetes Lager läßt sich daher im Vergleich zu herkömmlichen und gleich stark belastbaren Regalkonstruktionen mit weniger Montageaufwand und damit in kürzerer Zeit erstellen.

Infolge des Freiraumes kann sich der durch die Rollen des Satelliten belastete Profilabschnitt geringfügig absenken, ohne sich hierdurch zugleich auf der unterhalb angeordneten Traverse abzustützen. Für die Funktion des Hubwagens bzw. Satelliten ist diese leichte Absenkung der Laufbahn unschädlich, da die seitliche Führung des Hubwagens gleichwohl gewährleistet ist. Hingegen ist von entscheidendem Vorteil, daß die genannte Absenkungsmöglichkeit der Laufbahn über deren gesamte Länge einheitlich ist, so daß ein besonders ruhiger Lauf des Hubwagens entlang der Profilschienen möglich ist. Würde sich hingegen die Laufbahn bereits unbelastet unmittelbar auf der Oberseite der Traverse abstützen, wäre im Bereich der Querung der Traverse eine gewichtsbedingte Absenkung der Laufbahn nicht möglich, so daß beim Überfahren dieser Stelle durch den Hubwagen derselbe Effekt wie beim Überfahren einer Bodenwelle auftreten würde, was dann wiederum zur Folge hätte, daß die auf dem Hubwagen befindliche Ladung in Schwankungen gerät.

Um die Gewichtskräfte der beladenen Paletten oder sonstigen Stückgüter besser auf die darunter angeordneten Traversen abzuführen, wird mit einer Ausgestaltung der Erfindung vorgeschlagen, daß die Konsole mit der Oberseite der Traverse und zusätzlich mit zumindest einer vertikalen Fläche der Traverse verschweißt ist.

Zur Erzielung einer geringen Querschnittshöhe der Traverse ist es von großem Vorteil, wenn diese als geschlossenes Metallprofil mit vorzugsweise rechteckigem Querschnitt gestaltet ist. Auf diese Weise läßt sich daher die Höhe in den einzelnen Fächern des Regals besser ausnutzen.

Da die statische Belastbarkeit rechteckiger geschlossener Metallprofile höher ist als die Belastbarkeit eines offenen Metallprofiles gleichen Querschnitts, lassen sich auf einem Traversenabschnitt zwischen zwei benachbarten Stützen zwei oder mehr Lagergassen mit jeweils zwei Paar Profilschienen unterbringen, wohingegen bei herkömmlichen Konstruktionen zwischen zwei benachbarten vertikalen Stützen jeweils nur eine Lagergasse realisierbar ist, um eine zu starke Biegebelastung der aus offenen Profilen bestehenden Traversen zu vermeiden.

Zur Versteifung jenes Profilabschnittes der Profilschiene, welcher die Laufbahn bildet, kann der Profilabschnitt entlang seines der jeweils anderen Profilschiene zugewandten Randes mit einer nach unten gerichteten Abwinklung versehen sein. Aus den weiter oben angegebenen Gründen sollte jedoch diese Abwinklung die unterhalb angeordnete Traverse nicht berühren.

Ferner wird vorgeschlagen, daß die Konsolen symmetrisch bezüglich der Ein- und Auslagerungsrichtung gestaltet sind. Auf diese Weise läßt sich jede Traverse wahlweise auch in einer um 180° gedrehten Einbaulage an den Stützen befestigen.

Weitere Einzelheiten und Vorteile der Erfindung werden nachfolgend anhand eines Ausführungsbeispieles erläutert, das auf der Zeichnung dargestellt ist. Im einzelnen zeigen:
- Fig. 1: in einer perspektivischen Darstellung einen Ausschnitt aus einem mehrstöckig aufgebauten Lagerregal für die Lagerung bestückter Paletten mit Laufschienen für einen Satelliten,
- Fig. 2: in einer Frontansicht eine Traverse mit darauf aufgeschweißter Konsole, die wiederum eine Profilschiene für den Satelliten trägt,
- Fig. 3: die Gegenstände nach Fig. 2 in einer Seitenansicht mit geschnittener Traverse.

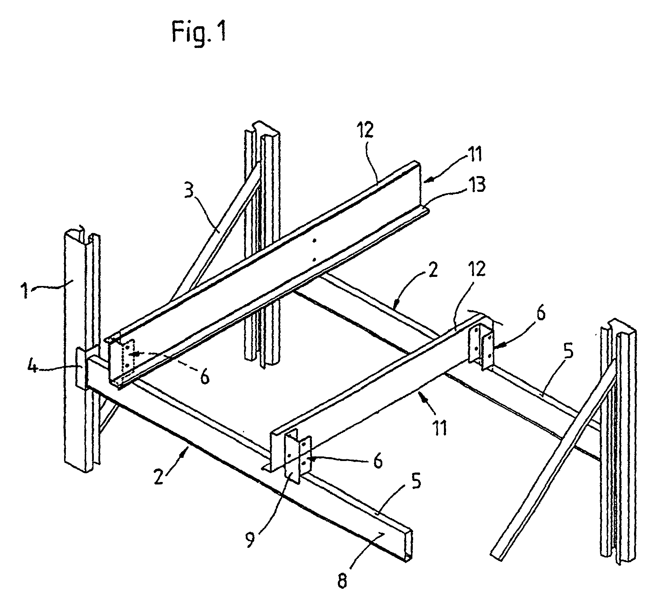

In Fig. 1 ist lediglich ein kleiner Ausschnitt aus einem ausgedehnten Regal zur Lagerung normierter, beladener Paletten oder anderer Stückgüter mit genormter Grundfläche dargestellt. Derartige Lagerregale können, abhängig von der jeweiligen Höhe der Fächer, mehrere Stockwerke hoch sein. Die Grundstruktur des Lagerregals besteht aus vertikalen Stützen 1 und horizontalen Traversen 2, welche die Stützen 1 miteinander verbinden und der Gesamtkonstruktion nach Art eines Fachwerks Stabilität verleihen. Zur Erzielung der erforderlichen Stabilität sind ferner schräge Verstrebungen 3 zwischen den Stützen 1 angeordnet. Beim Ausführungsbeispiel sind die vertikalen Stützen als C-Profile gestaltet, in deren offenen Kanälen die schrägen Verstrebungen 3 verschraubbar sind. Bei den Traversen 2 handelt es sich, wie auf der Zeichnung erkennbar ist, um geschlossene Stahlprofile mit rechteckigem Querschnitt. Diese sind an ihren Enden über Verbindungselemente 4 an den vertikalen Stützen 1 angeschraubt.

Auf die Oberseite 5 jeder Traverse 2 sind zwei oder vier oder noch mehr geradzahlige Konsolen 6 aufgeschweißt, die identisch gestaltet sind. Eine erste Schweißnaht 7a ist auf der vertikalen Fläche 8 der Traverse 2 gezogen, wozu sich eine nach unten ragende Verlängerung 9 der Konsole 6, mit der die Konsole 6 an der Traverse 2 anliegt, an der vertikalen Fläche 8 abstützt. Zwei weitere Schweißnähte 7b sind entlang der Oberseite 5 der Traverse 2 gezogen.

Die Traverse mit den darauf angeschweißten Konsolen 6 steht bei der Montage des Lagerregals als einstückiges und vorzugsweise bereits insgesamt vorlackiertes Teil zur Verfügung. Das Verschweißen der Traversen mit den Konsolen erfolgt in einem vorgelagerten Herstellungsprozeß und vorzugsweise vollautomatisch. Der Fertigungsprozeß hierfür kann durch geeignete Schneidund Biegewerkzeuge ferner so ausgelegt werden, daß sich verschieden hohe Konsolen innerhalb einer Fertigungslinie herstellen und mit den Traversen verbinden lassen. Die Biegung der U-förmigen Konsolen aus einem Blechformteil sowie das anschließende Verschweißen mit der Traverse erfolgt also in einem geschlossenen On-Line-Fertigungsprozeß, an den sich dann der Lackierprozeß anschließt.

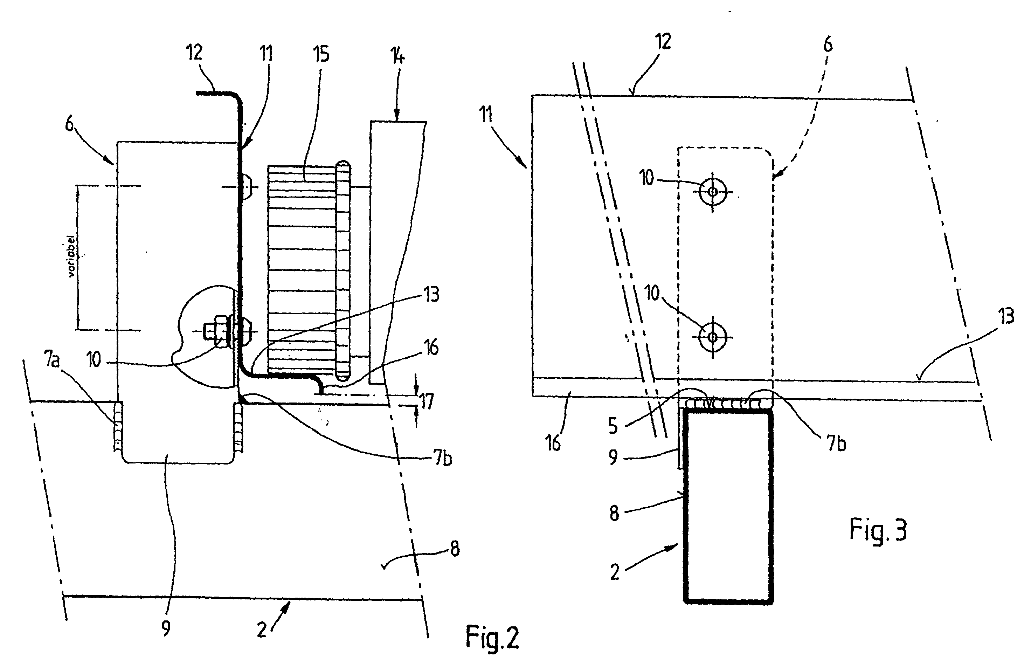

Jede Konsole 6 ist an beiden Seitenflächen mit mindestens zwei Löchern versehen, durch die sich Schrauben 10 hindurchstrecken lassen, um so eine mit entsprechenden Löchern versehene Profilschiene 11 an der vertikalen Seitenfläche der Konsole 6 zu befestigen. Die Profilschienen 11, von denen, wie Fig. 1 erkennen läßt, immer zwei paarweise verwendet werden, dienen zwei Aufgaben: Der obere Abschnitt der Profilschiene 11 ist horizontal gestaltet und bildet eine langgestreckte Auflagefläche 12, auf der die Paletten bzw. Stückgüter mit ihrer Unterseite aufliegen. Auch in ihrem unteren Querschnittsbereich ist die Profilschiene 11 mit einer horizontalen Fläche versehen, die eine Laufbahn 13 für einen rollengeführten Hubwagen 14 bildet. Ein solcher Hubwagen 14 wird auch als "Satellit" bezeichnet, und der Lagertyp selbst als "Satellitenlager". Der Hubwagen 14, von dem auf Fig. 2 nur die auf der Laufbahn 13 aufliegenden Rollen 15 erkennbar sind, verfügt über ein eingebautes Hubsystem, um von unten die Paletten bzw. Stückgüter zu erfassen und anzuheben. Solange kann die jeweils angehobene Palette an einen anderen Lagerplatz entlang der langgestreckten Profilschienen 11 verbracht und wieder auf die Auflageflächen 12 abgesetzt werden.

Die Profilschiene 11 ist im Querschnitt in etwa S-förmig gestaltet, wobei, bezogen auf die jeweiligen Laufgasse für den Hubwagen 14, die Auflagefläche 12 horizontal nach außen, und die Laufbahn 13 horizontal nach innen gerichtet ist. An ihrem äußeren Rand ist der die Laufbahn 13 bildende Profilabschnitt der Profilschiene 11 mit einer nach unten gerichteten Abwinklung 16 versehen, die, ebenso wie der die Laufbahn 13 bildende Profilabschnitt selbst, die unterhalb angeordnete Traverse 2 nicht berührt. Hier besteht also ein vertikaler Freiraum 17, so daß der die Laufbahn 13 bildende Profilabschnitt unter der Last des Satelliten 14 federnd nach unten nachgeben kann, und zwar über die gesamte Länge der Profilschiene gleichmäßig. Hierdurch wird eine besonders ruhige und erschütterungsfreie Fahrt des Satelliten 14 entlang der gesamten Laufgasse erzielt.

Zur exakten Ausrichtung der aus Metall bestehenden Profilschiene 11 können Unterlegscheiben verwendet werden, die je nach Bedarf zwischen Konsole 6 und Profilschiene 11 auf die Schraube 10 aufgesetzt werden.

## Patentansprüche

1. Lager für Paletten oder für Stückgüter mit genormter Grundfläche, mit einer Stützkonstruktion aus vertikalen Stützen, zwischen denen sich quer zur Einund Auslagerungsrichtung horizontale Traversen erstrecken, und mit paarweise oberhalb der Traversen angeordneten, sich in Ein- und Auslagerungsrichtung erstreckenden Profilschienen, an denen jeweils eine langgestreckte Auflagefläche für die Paletten oder Stückgüter und unterhalb der Auflagefläche eine langgestreckte Laufbahn für einen rollengeführten Hubwagen (Satellit) ausgebildet ist, wobei die Profilschienen (11) an Konsolen (6) befestigt sind, und wobei jede Konsole (6) an der darunterliegenden Traverse (2) angeschweißt ist, wobei die Laufbahn (13) der Profilschiene (11) an einem in Richtung auf die jeweils andere Profilschiene (11) ragenden Profilabschnitt ausgebildet ist,
**dadurch gekennzeichnet,**
**daß** sich zwischen dem Profilabschnitt und der unterhalb angeordneten Traverse (2) ein vertikaler Freiraum (17) befindet, ohne daß sich der Profilabschnitt auf der Traverse (2) abstützt.

2. Lager nach Anspruch 1, **dadurch gekennzeichnet, daß** die Konsole (6) mit der Oberseite (5) der Traverse (2) und zusätzlich mit zumindest einer vertikalen Fläche (8) der Traverse (2) verschweißt ist.

3. Lager nach Anspruch 1 oder Anspruch 2, **dadurch gekennzeichnet, daß** die Traverse (2) ein geschlossenes Metallprofil mit vorzugsweise rechteckigem Querschnitt ist.

4. Lager nach einem der vorhergehenden Ansprüche, **dadurch gekennzeichnet, daß** der Profilabschnitt entlang seines der jeweils anderen Profilschiene zugewandten Randes mit einer nach unten gerichteten Abwinklung (16) versehen ist, die die unterhalb angeordnete Traverse (2) nicht berührt.

5. Lager nach einem der vorangehenden Ansprüche, **dadurch gekennzeichnet, daß** die Konsolen (6) symmetrisch bezüglich der Ein- und Auslagerungsrichtung gestaltet sind.

6. Lager nach Anspruch 5, **dadurch gekennzeichnet, daß** die Konsolen (6) aus Profilen mit U-förmigem Querschnitt bestehen.

## Claims

1. Store for pallets or for piece goods with a standardized base area, with a supporting structure consisting of vertical supports, between which horizontal crossmembers extend transversely to the goods-inward and goods-outward directions, and with profile rails which are arranged in pairs above the crossmembers and extend in the goods-inward and goods-outward directions and on each of which are formed an elongate bearing surface for the pallets or piece goods and, below the bearing surface, an elongate runway for a roller-guided lift truck (satellite), the profile rails (11) being fastened to brackets (6), and each bracket (6) being welded to the crossmember (2) lying below it, the runway (13) of the profile rail (11) being formed on a profile portion projecting in the direction of the other profile rail (11) in each case, **characterized in that** a vertical clearance (17) is located between the profile portion and the crossmember (2) arranged below it, without the profile portion being supported on the bracket (6).

2. Store according to Claim 1, **characterized in that** the bracket (6) is welded to the top side (5) of the crossmember (2) and additionally to at least one vertical surface (8) of the crossmember (2).

3. Store according to Claim 1 or Claim 2, **characterized in that** the crossmember (2) is a closed metal profile of preferably rectangular cross section.

4. Store according to one of the preceding claims, **characterized in that** the profile portion is provided, along its edge facing the other profile rail in each case, with a downwardly directed angling (16) which does not touch the crossmember (2) arranged below it.

5. Store according to one of the preceding claims, **characterized in that** the brackets (6) are configured symmetrically with respect to the goods-inward and goods-outward directions.

6. Store according to Claim 5, **characterized in that** the brackets (6) consist of profiles of U-shaped cross section.

## Revendications

1. Moyen de stockage pour palettes ou pour marchandises en colis à surface de base normalisée, comprenant une structure de soutien constituée de montants verticaux, entre lesquels s'étendent des traverses transversales aux directions de stockage et de déstockage, et comprenant des rails profilés qui sont disposés par paires au-dessus des traverses, qui s'étendent dans les directions de stockage et de déstockage et au niveau de chacun desquels sont ménagées une surface porteuse allongée pour les palettes ou les marchandises en colis et, au-dessous de la surface porteuse, une piste de roulement allongée pour un chariot élévateur (satellite) guidé sur galets, les rails profilés (11) étant fixés à des consoles (6), et chaque console (6) étant soudée à la traverse (2) située au-dessous, la piste de roulement (13) du rail profilé (11) étant conçue sur une portion de profilé saillant en direction de l'autre rail profilé (11), **caractérisé en ce qu'**un espace libre vertical (17) se trouve entre la portion de profilé et la traverse (2) disposée au-dessous, sans que la portion de profilé prenne appui sur la traverse (2).

2. Moyen de stockage selon la revendication 1, **caractérisé en ce que** la console (6) est soudée au dessus (5) de la traverse (2) et, en plus, à au moins une face verticale (8) de la traverse (2).

3. Moyen de stockage selon la revendication 1 ou la revendication 2, **caractérisé en ce que** la traverse (2) est un profilé métallique fermé à section transversale de préférence rectangulaire.

4. Moyen de stockage selon une des revendications précédentes, **caractérisé en ce que** la portion de profilé est pourvue, le long de son bord tourné vers l'autre rail profilé, d'une partie coudée (16) qui est orientée vers le bas et qui ne touche pas la traverse (2) disposée au-dessous.

5. Moyen de stockage selon une des revendications précédentes, **caractérisé en ce que** les consoles (6) sont conçues de manière symétrique par rapport aux directions de stockage et de déstockage.

6. Moyen de stockage selon la revendication 5, **caractérisé en ce que** les consoles (6) sont constituées de profilés à section transversale en forme de U.
